(19) Europäisches Patentamt

European Patent Office

Office européen des brevets

(11) **EP 1 529 326 B1**

(12) **EUROPÄISCHE PATENTSCHRIFT**

(45) Veröffentlichungstag und Bekanntmachung des Hinweises auf die Patenterteilung:
**08.11.2006 Patentblatt 2006/45**

(21) Anmeldenummer: 03764893.8

(22) Anmeldetag: **10.07.2003**

(51) Int Cl.:
*H01S 3/11* (2006.01)  *H01S 3/0941* (2006.01)
*H01S 3/10* (2006.01)  *H01S 3/102* (2006.01)

(86) Internationale Anmeldenummer:
**PCT/DE2003/002359**

(87) Internationale Veröffentlichungsnummer:
**WO 2004/010550 (29.01.2004 Gazette 2004/05)**

(54) **IMPULSLASERANORDNUNG UND VERFAHREN ZUR IMPULSLÄNGENEINSTELLUNG BEI LASERIMPULSEN**

PULSE LASER ARRANGEMENT AND METHOD FOR SETTING PULSE LENGTH FOR LASER PULSES

ENSEMBLE LASER PULSE ET PROCEDE DE REGLAGE DE LARGEUR D'IMPULSIONS LASER

(84) Benannte Vertragsstaaten:
**DE**

(30) Priorität: **12.07.2002 DE 10232124**

(43) Veröffentlichungstag der Anmeldung:
**11.05.2005 Patentblatt 2005/19**

(73) Patentinhaber: **JENOPTIK Laser, Optik, Systeme GmbH**
**07745 Jena (DE)**

(72) Erfinder:
• **HOLLEMANN, Günter**
**07749 Jena (DE)**
• **LEITNER, Martin**
**07743 Jena (DE)**
• **SYMANOWSKI, Jan**
**07743 Jena (DE)**

(74) Vertreter: **Bertram, Helmut et al**
**Patentanwälte**
**OEHMKE & KOLLEGEN**
**Neugasse 13**
**07743 Jena (DE)**

(56) Entgegenhaltungen:
DE-A- 10 043 269    GB-A- 1 308 384
US-A- 5 867 324    US-A- 5 907 570

**Beschreibung**

Die Erfindung bezieht sich auf eine Impulslaseranordnung zur Erzeugung von Laserimpulsen mit einstellbarer Impulslänge, bei der ein diodengepumpter, gütegeschalteter Festkörperlaser-Oszillator mit einem anisotropen Laserkristall (1) und variierbarer Oszillatorleistung zur Bereitstellung von Oszillatorimpulsen vorgesehen ist, wobei dem gütegeschalteten Festkörperlaser-Oszillator ein mehrstufiger Laserverstärker nachgeschaltet ist, bei dem in jeder Stufe ein verstärkendes Medium mit einer Kleinsignalverstärkung von mehr als 10 vorgesehen ist und wobei die durch alle verstärkenden Medien hervorgerufene Gesamtkleinsignalverstärkung mehr als 1000 beträgt.

Die Erfindung betrifft insbesondere die Einstellung der Impulslänge bei Grundmodelasern hoher Ausgangsleistung von mehr als 10 W.

Für viele industrielle oder medizinische Anwendungen ist es vorteilhaft, die Pulslängen sowie die Pulsenergie eines Lasers zu variieren, um dadurch dessen Wirkung gezielt steuern zu können. Pulslängen im Bereich einiger 100 ns bis hin zu einigen μs bei Pulswiederholraten zwischen 10 kHz und 200 kHz sind dabei von besonderem Interesse. Bevorzugtes Anwendungsgebiet in der Medizin ist derzeit die Augenheilkunde und in der Industrie das Laservereinzeln von Chips auf Silizium- oder GaAs-Wafern. Aber auch in der Materialbearbeitung, wie zum Beispiel bei der Keramik- oder Diamantbearbeitung, beim Laserhonen und Laserbohren besteht ein dringender Bedarf, wobei hier allerdings besonders kurze Impulse unterhalb 10 ns gefordert sind.

In großer Anzahl vorhandene Ausführungsformen von kontinuierlich gepumpten, akustooptisch gütegeschalteten Festkörperlaser-Oszillatoren, die vor allem lampengepumpte oder transversal diodengepumpte Nd:YAG-Stablaser umfassen, erreichen typische Pulslängen von 50 ns bis 200 ns, wobei die großen Pulslängen bei geringer Pumpleistung und nur bei einer hohen Pulswiederholrate, die kurzen Pulslängen dagegen nur bei einer geringen Pulswiederholrate erreichbar sind. Längere Pulsdauern als 200 ns lassen sich mit diesen Ausführungen aufgrund der schwierigen Erreichbarkeit des transversalen Grundmodebetriebs und einer niedrigen Pulsstabilität nicht mehr technisch vernünftig herstellen. Darüber hinaus lassen sich solche Laser auch nur in einem sehr eingeschränkten Parameterfenster betreiben.

Zwar werden mit endgepumpten Nd:YVO$_4$-Laseroszillatoren besonders hohe Durchschnittsleistungen bei Repetitionsraten von 100 kHz erreicht, doch ist auch hier bei gegebener Resonatorkonfiguration (L, V, R, P$_{th}$) eine Variation der Pulslänge nur durch eine Änderung der Pumpleistung P$_p$ möglich und führt aufgrund der Korrelation zwischen Pulslänge und Pulsenergie zu einer drastischen Reduktion der Ausgangsleistung bei einer Vergrößerung der Pulslänge. Der Zusammenhang ist bei [R. Iffländer: Solid-State Lasers for Materials Processing, Springer Series in Optical Sciences, Springer Verlag, Berlin (2001)] beschrieben, wonach die Pulslänge aus den Parametern Pumpleistung P$_p$, der Pumpleistung bei der Laserschwelle P$_{th}$, Auskoppelgrad R, Verlustfaktor V und Resonatorlänge L nach der Formel

$$\tau = \frac{L}{c} \cdot \frac{P_p}{-\ln(V\sqrt{R})[P_p - P_{th} - P_{th}\ln(P_p/P_{th})]}$$

berechnet werden kann.

Darüber hinaus führt die Änderung der resonatorinternen Leistung durch die Variation der Pumpstrahlungsleistung im Allgemeinen zu einer Änderung der thermischen Linse des Laserkristalls, so dass sich auch die Strahlparameter des ausgekoppelten Strahls ändern. Dieser Effekt ist für viele Anwendungen störend, insbesondere führt eine anisotrop wirkende thermische Linse zu einer Asymmetrie des Strahlprofils.

Auch eine Änderung der Repetitionsrate des Lasers ist unmittelbar mit einer Veränderung der Pulsdauer und der Ausgangsleistung verbunden. Dabei nimmt sowohl die Pulsdauer als auch die mittlere Leistung mit geringerer Repetitionsrate ab.

Ferner ist es aus der DE 199 58 566 A1 und der DE 199 27 918 A1 bekannt, bei diodengepumpten Lasern mit resonatorinterner Frequenzverdopplung für medizinische Anwendungen, eine Pulslängenvariation durch eine Steuerung der Gütemodulation zu erreichen. Von Nachteil ist, dass zusätzliche Oszillatorverluste infolge der Störung des Impulsaufbaus zu einer schlechten Effektivität führen und dass in der starken nichtlinearen Dynamik durch den exponentiellen Impulsanstieg eine steuerungstechnisch aufwendige Lösung begründet ist.

Aufgabe der Erfindung ist es, die Pulslänge über einen weiten Bereich weitgehend unabhängig von der Laserausgangsleistung zu ändern, insbesondere einer Leistungsreduzierung entgegenzuwirken und eine sich negativ auswirkende Veränderung der Strahlparameter bei der Pulsverlängerung über eine Variation der Oszillatorleistung zu vermeiden.

Gemäß der Erfindung wird diese Aufgabe bei einer Impulslaseranordnung der genannten Art dadurch gelöst, dass von den kristallographischen Achsen des anisotropen Laserkristalls diejenige Achse, in deren Richtung der höchste Wert der Kristallbruchgrenze vorliegt, entlang des größten, in Richtung der geringeren Ausdehnung des Pumpstrahlquerschnittes gelegten Temperaturgradienten ausgerichtet ist.

Durch die hohe Kleinsignalverstärkung, die mehr als 1000 betragen sollte, findet eine Impulsformung und Impulsverbreiterung infolge der sich ändernden Inversionsdichte statt, bei der keine lineare Intensitätsüberhöhung über den gesamten Oszillatorimpuls eintritt, sondern die Vorderflanke des Oszillatorimpulses wird durch die hier noch größere Inversion sehr viel mehr verstärkt als die Rückflanke, bei der die Inversion bereits herabgesetzt ist. In der Folge ist die Impulsverstärkung mit einer zeitlichen Vorversetzung der Anstiegsflanke des Laserimpulses gegenüber der des Oszillatorimpulses verbunden.

Mit der Erfindung kann die Pulslänge aufgrund der Variation der Oszillatorleistung durch eine Änderung der Pumpstrahlungsleistung über den Diodenstrom in einem extrem weiten Bereich (200 ns - 2000 ns) eingestellt werden, während die Laserausgangsleistung weitgehend konstant bleibt. In diesem Sinne führt der hohe Grad der Kleinsignalverstärkung zu der Entkopplung der Variation der Oszillatorleistung von der Laserausgangsleistung.

Von Vorteil ist es, wenn die zum Kehrwert der Kleinsignalverstärkung proportionale Querschnittsfläche des verstärkenden Mediums minimiert wird. Insbesondere sollte der Modenquerschnitt der modenangepassten Strahlen der Pumpstrahlung und der zu verstärkenden Laserstrahlung in dieser Querschnittsfläche in jedem verstärkenden Medium unterhalb von 0,5 mm$^2$ liegen.

In vorteilhafter Ausgestaltung ist der anisotrope Laserkristall von einem asymmetrischen Pumpstrahl gepumpt, dessen Pumpstrahlquerschnitt senkrecht zueinander unterschiedliche Ausdehnungen aufweist und der von einem an diese Asymmetrie angepassten Laserstrahlquerschnitt mit einem Achsverhältnis in senkrecht zueinander verlaufenden Richtungen größer 1:1 und kleiner 1:3 durchsetzt ist.

Gemäß einer besonders bevorzugten Ausbildung der Erfindung weist der anisotrope Laserkristall, der einen von dem Pumpstrahl durchsetzten Kristallquerschnitt mit paarweise parallel gegenüberliegenden Kristallkanten von unterschiedlicher Kantenlänge enthält, seinen größten Wärmeausbreitungskoeffizienten in Richtung der geringeren Ausdehnung des Pumpstrahlquerschnittes und parallel zur Kristallkante mit der geringeren Kantenlänge auf.

Die Erfindung liefert somit ein universelles Werkzeug zur Gestaltung der Pulslänge für eine Vielzahl von Anwendungsbeispielen aus Industrie und Medizin, indem besonders kurze aber auch besonders lange Impulse mit einer einheitlichen Pulsform sowie hohen Pulsspitzenleistungen und einer konstant hohen Pulswiederholrate zur Verfügung gestellt werden. Hervorzuheben ist insbesondere die Pulsstabilität bei langen Impulsen.

Die Erfindung soll nachstehend anhand der schematischen Zeichnung näher erläutert werden. Es zeigen:

Fig. 1           den Aufbau eines gütegeschalteten Festkörperlaser-Oszillators

Fig. 2           die Achsenorientierung im anisotropen Laserkristall

Fig. 3           einen Laserverstärker, der dem gütegeschalteten Festkörperlaser-Oszillator nachgeschaltet ist

Fig. 4, 4a      mit Hilfe der erfindungsgemäßen Anordnung, bestehend aus einem Oszillator geringer Leistung und einem Verstärker mit sehr hoher Kleinsignalverstärkung, erzeugte unterschiedliche Pulsformen an den Ausgängen des Festkörperlaser-Oszillators und des Laserverstärkers

Fig. 5           ein Diagramm zum Verhalten der Pulslänge am Ausgang des Festkörperlaser-Oszillators und am Ausgang des Laserverstärkers in Abhängigkeit vom Diodenstrom der Pumpstrahlquelle für den Festkörperlaser-Oszillator und damit von der Oszillatorleistung

Fig. 6           ein Diagramm zum Verhalten der Laserausgangsleistung in Abhängigkeit vom Diodenstrom der Pumpstrahlquelle für den Festkörperlaser-Oszillator und damit von der Oszillatorleistung

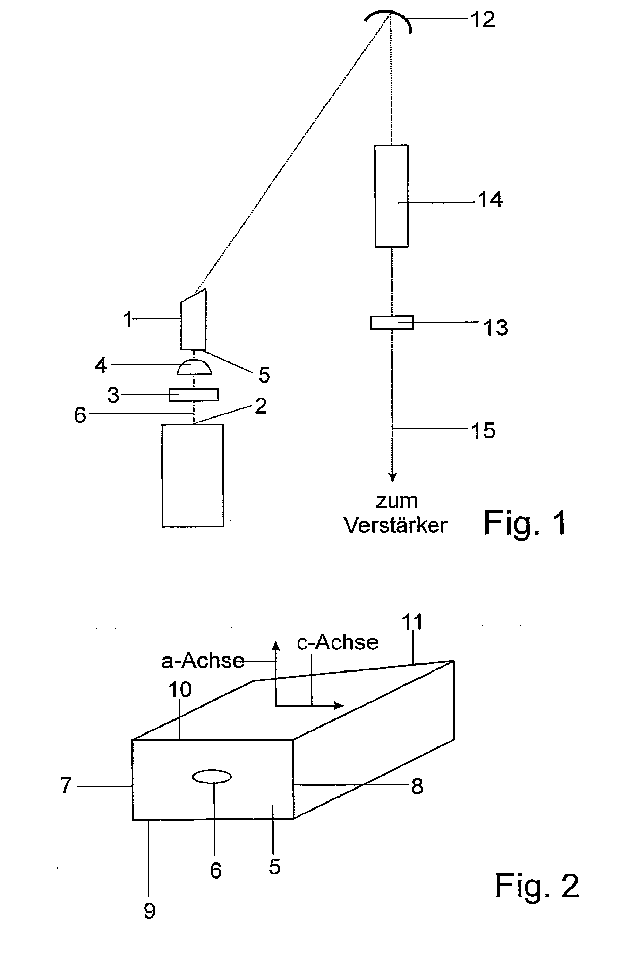

Ein in Fig. 1 dargestellter und für die Erfindung besonders geeigneter gütegeschalteter Festkörperlaser-Oszillator enthält als Laserkristall einen Nd:YVO$_4$-Kristall 1, der direkt mittels eines Hochleistungsdiodenlasers 2 in Form einer Diodenlaserzeile, eines Diodenlaserbarrens oder einer Anordnung davon gepumpt ist. Eine dafür ausgebildete, aus zwei Zylinderlinsen 3, 4 mit senkrecht zueinander stehenden Zylinderachsen bestehende Abbildungsoptik transformiert die kollimierte Pumplichtstrahlung (808 nm) zur räumlichen Überlappung mit der Lasermode. Dabei wird das ursprüngliche Fokus-Halbachsen-Verhältnis zwischen der Fast-axis und der Slow-axis von etwa 1:20 in ein asymmetrisches Achsverhältnis von 1:2,3 umgewandelt und mit diesem asymmetrischen Strahlquerschnitt auf den Nd:YVO$_4$-Kristall 1 abgebildet. Im Gegensatz zu einer Strahlungsübertragung mittels Lichtleitfasern führt die vorgesehene direkte Freistrahlübertragung der Pumpstrahlung zu einem technologisch einfachen, mit geringeren Verlusten behafteten und belastungsfähigeren Aufbau.

Der anisotrope Nd:YVO$_4$-Kristall 1, der an seiner, der Diodenlaserzeile 2 zugewandten Strahleintrittsfläche 5 mit einer Antireflexbeschichtung für die Pumpwellenlänge von 808 nm und einem hochreflektierenden Schichtsystem für die Laserwellenlänge von 1064 nm versehen ist, ist gemäß Fig. 2 derart zum Pumpstrahl 6 orientiert, dass seine kristallographische c-Achse in Richtung der größeren Ausdehnung (parallel zur Slow-axis) und die kristallographische a-Achse, in deren Richtung der höchste Wert der Kristallbruchgrenze und des Wärmeausbreitungskoeffizienten vorliegt, in Richtung der geringeren Ausdehnung des Pumpstrahlquerschnittes (parallel zur Fast-axis) gerichtet sind.

Es hat sich gezeigt, dass eine erhebliche Erhöhung der Kristallfestigkeit gegenüber einer thermischen Beanspruchung durch eine Erniedrigung der Kristallhöhe in Richtung der a-Achse und einer damit verbundenen Vergrößerung des Temperaturgradienten erreicht werden kann. Das bedeutet, dass der Laserkristall 1 bei wesentlich höheren Pumpleistungen und Pumpleistungsdichten betrieben werden kann als bei bisher bekannten Anordnungen.

Dieser Forderung wird die Ausführung gemäß Fig. 2 gerecht, indem der Laserkristall einen von dem Pumpstrahl 6 durchsetzten Kristallquerschnitt mit paarweise parallel gegenüberliegenden Kristallkanten 7, 8, 9 und 10 von unterschiedlicher Kantenlänge aufweist, wobei die Kristallkanten 7 und 8 gegenüber den Kristallkanten 9 und 10 eine geringere Kantenlänge aufweisen und in Richtung der geringeren Ausdehnung des Pumpstrahlquerschnittes verlaufen.

Die durch die Reduzierung der Kristallabmessungen in Richtung der geringeren Ausdehnung des Pumpstrahlquerschnittes hervorgerufene Asymmetrie des Wärmeflusses und die daraus resultierende Asymmetrie der thermischen Linse bewirkt, dass im Inneren des Kristalls ein elliptischer Laserstrahlquerschnitt erzeugt wird, dessen Achsverhältnis von größer 1:1 und kleiner 1:3 an das des Pumpstrahlquerschnittes angepasst ist, ohne dass weitere astigmatische Elemente im Resonator benötigt werden, d.h., ohne dass für die unterschiedlichen Achsen unterschiedliche Strahlformungsmittel eingesetzt werden müssen.

Gegenüberliegend zur Strahleintrittsfläche 5 ist der Laserkristall mit einer, unter einem Brewsterwinkel geschnittenen Endfläche 11 versehen, wodurch das Achsverhältnis noch um den Faktor des Verhältnisses des Brechungsindex des Laserkristalls zum Brechungsindex der Luft vergrößert werden kann. Andererseits weist der innerhalb des Laserkristalls elliptisch ausgebildete Laserstrahlquerschnitt bei seinem Austritt aus dem Kristall einen annähernd runden Querschnitt auf.

Neben der verspiegelten Strahleintrittsfläche 5 enthält der Festkörperlaser-Oszillator einen, den Stabilitätskriterien eines Resonators angepassten Faltungsspiegel 12 sowie einen Auskoppelspiegel 13. In einer ersten Ausführungsform, bei der Impulse mit größerer Pulslänge von mehr als 500 ns erzeugt werden scllen, betragen die beiden, die Pulslänge beeinflussenden Parameter Resonatorlänge und Auskopplungsgrad 860 mm bzw. 10%. Allgemein sind Resonatorlängen über 500 mm für solche "längeren" Impulse geeignet.

Verringert man den Krümmungsradius des Faltungsspiegels 12, kann die Resonatorlänge verkürzt und damit eine weitere Ausführung eines Festkörperlaser-Oszillators zur Erzeugung kürzerer Impulse (unterhalb 500 ns) aufgebaut werden. Bei einer Resonatorlänge von z. B. 240 mm kann die Durchschnittsleistung des Festkörperlaser-Oszillators bei unveränderter Strahlqualität (M$^2$<1,1) von 2,0 W bis 3,2 W variiert werden, was bei Repetitionsraten von 30 kHz zu Pulslängen im Bereich von 30 ns führt.

Natürlich kann der Festkörperlaser-Oszillator auch mit Resonatorlängen von weit unterhalb von 180 mm ausgelegt werden, um Pulslängen von weniger als 15 ns zu erreichen.

Zur Impulserzeugung ist zwischen dem Faltungs- und dem Auskoppelspiegel 12, 13 eine Güteschaltung in Form eines akustooptischen Schalters 14 angeordnet.

Die Resonatorkonfiguration ist so gewählt, dass die durch eine Leistungsvariation der Pumpstrahlung ($\Delta P = 2$ W) bedingte Änderung der thermischen Linse im Laserkristall zu keiner Veränderung der Strahlqualität ($M^2 \leq 1,1$) führt und zudem der Durchmesser des ausgekoppelten Laserstrahls maximal um 15% geändert wird. Die Oszillatorleistung kann in einem Bereich zwischen 0,8 W - 1,4 W geändert werden, was bei einer Repetitionsrate von 30 kHz zu Impulsdauern von 1900 ns - 360 ns hinter dem Verstärker führt.

Die Repetitionsrate kann über die Ansteuerung des akustooptischen Schalters 14 in einem Bereich von 10 kHz - 200 kHz eingestellt werden.

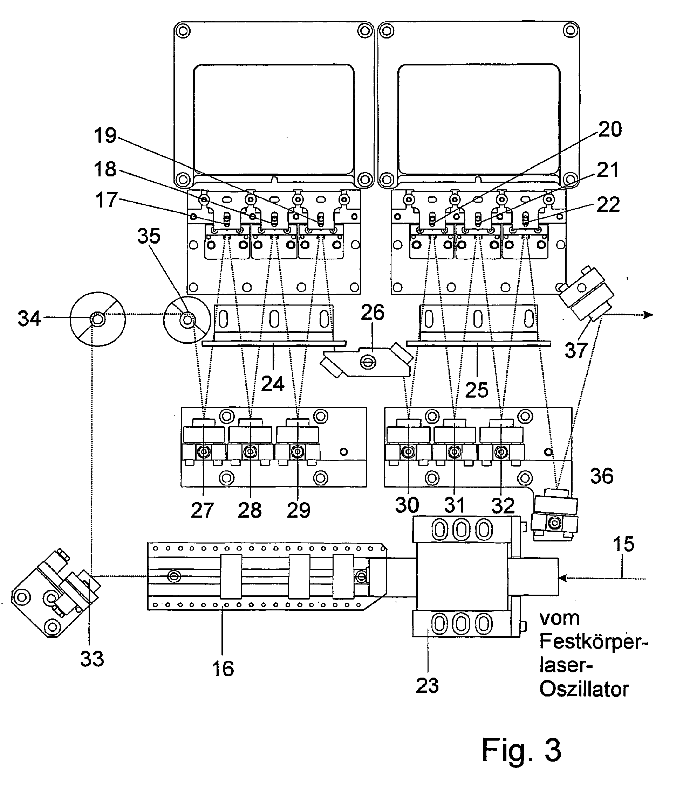

Die Strahlparameter des aus dem Festkörperlaser-Oszillator austretenden Laserstrahls 15 werden durch eine Linsenkombination 16 (Modematching) an einen nachgeordneten Laserverstärker (Fig. 3) angepasst, insbesondere wird der Laserstrahlquerschnitt in einem elliptischen Strahlquerschnitt von geringem Halbachsenverhältnis (1:2 bis 1:3) überführt. Durch die Invarianz der Strahlqualität und der geringen (15%) Änderung des Strahldurchmessers kann sichergestellt werden, dass diese Anpassung bei unterschiedlichen Pump- und Ausgangsleistungen gewährleistet ist. Dies ist Bedingung dafür, um die mit der Leistungsvariation des Festkörperlaser-Oszillators einhergehende Pulslängenvariation des verstärkten Strahls realisieren zu können.

Der in Fig. 3 dargestellte Laserverstärker (Ausgangsleistung 50 W), dessen einzelne Verstärkerstufen bereits in der DE 100 43 269 A1 ausführlich beschrieben wurden und auf die hier Bezug genommen wird, besteht aus sechs solcher Verstärkerstufen mit einer seriellen Anordnung von sechs Laserkristallen 17 - 22, die von ebenso vielen jeweils zugeordneten Hochleistungsdiodenlasern (in Fig. 3 verdeckt) diodengepumpt sind. Die aus den Hochleistungsdiodenlasern austretende Pumpstrahlung wird zunächst kollimiert und anschließend in die Laserkristalle 17 - 22 fokussiert.

Aufgrund der hohen Strahlqualität der Pumpstrahlung in der Fast-Axis-Richtung entsteht ein stark elliptischer Pumpfokus mit Abmessungen von etwa 0,1 mm x 2,0 mm, woraus bei einer absorbierten Pumpleistung von 12 W eine sehr hohe Pumpleistungsdichte und damit eine hohe Kleinsignalverstärkung resultiert. Diese beträgt mehr als 10 pro Verstärkerstufe, so dass sich für die sechs vorgesehenen Verstärkerstufen eine Gesamtkleinsignalverstärkung von größer $10^6$ ergibt.

Der aus dem Festkörperlaser-Oszillator austretende runde Laserstrahl 15 durchläuft zur Vermeidung von Rückwirkungen aus dem Laserverstärker in den Festkörperlaser-Oszillator einen Faraday-Isolator 23 und durchstrahlt aufgeweitet durch die Linsenkombination 16 anschließend in einem Zick-Zack-Pfad nacheinander alle sechs Laserkristalle 17 - 22. Zusätzlich wird der Laserstrahl 15 zur weiteren Anpassung an den stark elliptischen Pumpfokus mittels Zylinderlinsen 24, 25 in die Laserkristalle 17 - 22 fokussiert, so dass der in der Tangentialebene kollimierte Laserstrahl 15 die Laserkristalle 17 - 22 in der Sagittalebene mit einem stark elliptischen Fokus durchsetzt. Der vorliegende Laserverstärker ist zweigeteilt, wobei die beiden Teile über ein Periskop 26 optisch verbunden sind.

Nach seinem zweiten Durchtritt durch die Zylinderlinse 29 ist der Laserstrahl auch in der Sagittalebene wieder kollimiert mit dem gleichen elliptischen Querschnitt wie vor dem ersten Durchtritt durch die Zylinderlinse 29.

Somit sind die Laserkristalle 17 - 22 von modenangepassten Strahlen der Pumpstrahlung und der zu verstärkenden Laserstrahlung 15 durchsetzt, wobei sich infolge der eingestrahlten Pumpstrahlung eine thermische Linse mit unterschiedlicher Stärke in zueinander senkrechten Ebenen ausbildet. Die Laserstrahlung 15 ist, in der Ebene mit starker thermischer Linse fokussiert, in jeden der Laserkristalle 17 - 22 gerichtet, wobei eine sich bildende Strahltaille im Bereich der thermischen Linse liegt.

Zur Gewährleistung des Zick-Zack-Pfades dienen Faltspiegel 27 - 32, die auch dazu genutzt werden können, die Strahlabmessungen in der Slow-Axis-Richtung anzupassen. Weitere Umlenkelemente 33 - 37 dienen dem Aufbau einer kompakten Anordnung.

Der Laserstrahl 15 wird nach seinem Austritt aus dem Laserverstärker mittels einer nicht dargestellten Linsenanordnung bestehend aus vier Zylinderlinsen und einem Aufweitungsteleskop den gewünschten Strahlparametern für die vorgesehene Anwendung angepasst.

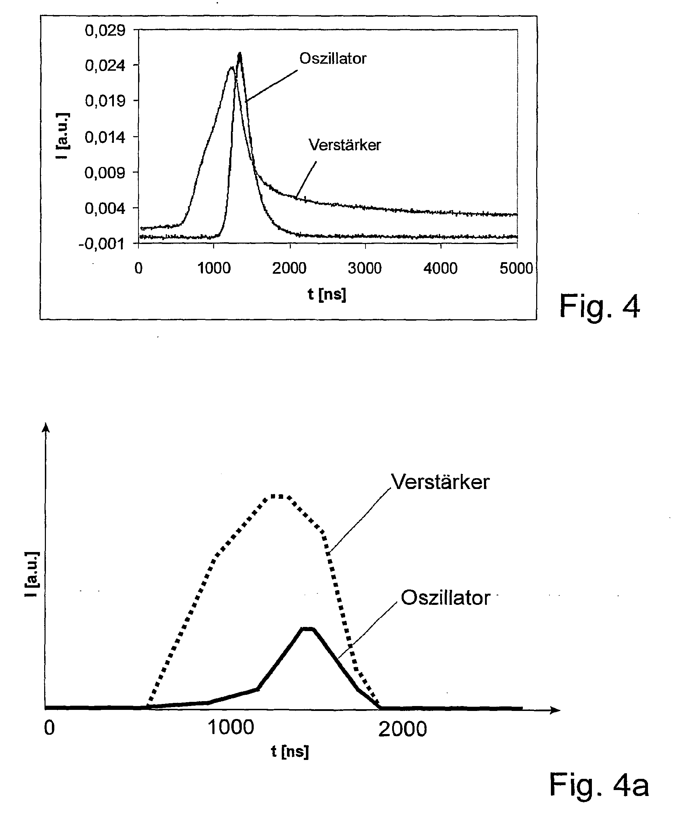

Fig. 4 und besonders Fig. 4a, bei der dem gütegeschalteten Oszillatorpuls ein übertrieben dargestellter exponentieller Anstieg der Vorderflanke vorausgeht, verdeutlichen, wie im ns-Bereich die Anstiegsflanke des Laserimpulses am Ausgang des Laserverstärkers der des Oszillatorimpulses zeitlich vorauseilt. Das ist bedingt durch die hohe Kleinsignalverstärkung des Laserverstärkers, wodurch bereits sehr kleine Oszillatorleistungen im µW-Bereich in einer sehr frühen Phase des Impulsaufbaus ausreichen, einen beträchtlichen Teil der Vorderflanke des Verstärkerimpulses zu bilden, so dass der Verstärker bereits frühzeitig - im dargestellten Fall vor Erreichen des Pulsmaximums des Oszillators - stark sättigt und das Pulsmaximum bereits überschritten ist. Der Impuls wird dadurch länger.

Insgesamt resultiert neben dem scheinbaren "Vorauslaufen" des Verstärkerpulses vor allem aber die erfindungsgemäß einstellbare Pulsverbreiterung durch die vorgeschlagene Anordnung.

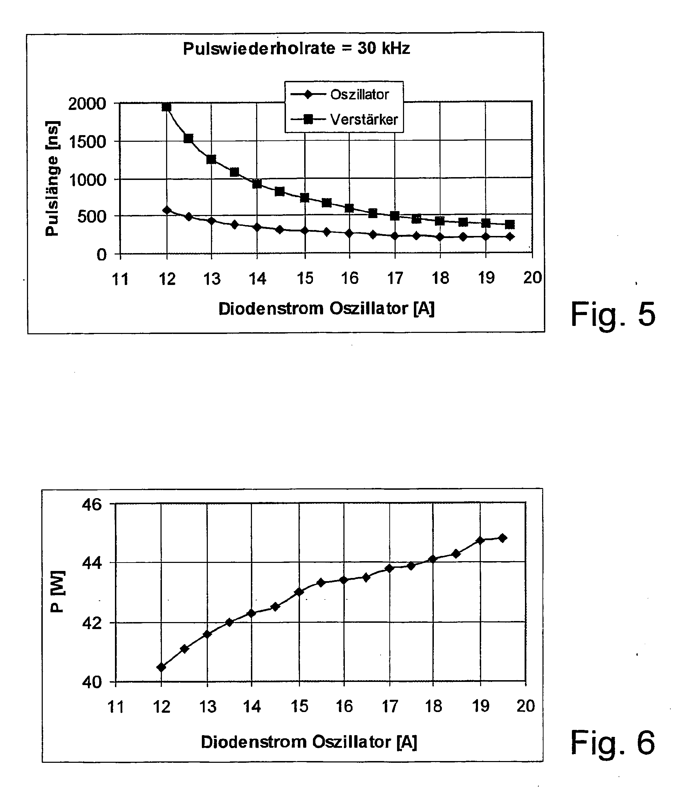

Fig. 5 zeigt diese zeitliche Verlängerung der Impulse infolge des Verstärkungsprozesses mit hoher Kleinsignalverstärkung, wobei über einen sehr weiten Bereich die Pumpstrahlungsleistung im Festkörperlaser-Oszillator verändert wird, währenddessen die Pumpstrahlungsleistung im Laserverstärker konstant bleibt.

Fig. 6 demonstriert das geringe Maß der Änderung der Ausgangsleistung (10%) am Verstärkerausgang bei einer Variation der Oszillatorleistung aufgrund der Dämpfung des Leistungsabfalls durch die Verstärkung.

### Patentansprüche

1. Impulslaseranordnung zur Erzeugung von Laserimpulsen mit einstellbarer Impulslänge, bei der ein diodengepumpter, gütegeschalteter Festkörperlaser-Oszillator mit einem anisotropen Laserkristall (1) und variierbarer Oszillatorleistung zur Bereitstellung von Oszillatorimpulsen vorgesehen ist, wobei dem gütegeschalteten Festkörperlaser-Oszillator ein mehrstufiger Laserverstärker nachgeschaltet ist, bei dem in jeder Stufe ein verstärkendes Medium mit einer Kleinsignalverstärkung von mehr als 10 vorgesehen ist und wobei die durch alle verstärkenden Medien hervorgerufene Gesamtkleinsignalverstärkung mehr als 1000 beträgt, **dadurch gekennzeichnet, dass** von den kristallographischen Achsen des anisotropen Laserkristalls (1) diejenige Achse, in deren Richtung der höchste Wert der Kristallbruchgrenze vorliegt, entlang des größten, in Richtung der geringeren Ausdehnung des Pumpstrahlquerschnittes gelegten Temperaturgradienten ausgerichtet ist.

2. Impulslaseranordnung nach Anspruch 1, **dadurch gekennzeichnet, dass** der anisotrope Laserkristall (1), der einen von dem Pumpstrahl durchsetzten Kristallquerschnitt mit paarweise parallel gegenüberliegenden Kristallkanten (7 - 10) von unterschiedlicher Kantenlänge enthält, seinen größten Wärmeausbreitungskoeffizienten in Richtung der geringeren Ausdehnung des Pumpstrahlquerschnittes und parallel zur Kristallkante (7, 8) mit der geringeren Kantenlänge aufweist.

3. Impulslaseranordnung nach Anspruch 2, **dadurch gekennzeichnet, dass** die modenangepassten Strahlen der Pumpstrahlung und der zu verstärkenden Laserstrahlung (15) in jedem verstärkenden Medium einen Modenquerschnitt aufweisen, der kleiner als 0,5 mm$^2$ ist.

4. Impulslaseranordnung nach einem der Ansprüche 1 bis 3, **dadurch gekennzeichnet, dass** der anisotrope Laserkristall (1) von einem asymmetrischen Pumpstrahl (6) gepumpt ist, dessen Pumpstrahlquerschnitt senkrecht zueinander unterschiedliche Ausdehnungen aufweist und der von einem an diese Asymmetrie angepassten Laserstrahlquerschnitt mit einem Achsverhältnis in senkrecht zueinander verlaufenden Richtungen größer 1:1 und kleiner 1:3 durchsetzt ist.

**Claims**

1. A pulsed laser array for generating laser pulses with an adjustable pulse duration, wherein a diode-pumped, Q-switched solid state laser oscillator is provided with an anisotropic laser crystal (1) and variable oscillator power so as to provide oscillator pulses, a multi-stage laser amplifier being arranged following the Q-switched solid state laser oscillator, in which amplifier an amplifying medium with a small signal amplification of greater than 10 is provided in each amplification stage, the total small signal amplification caused by all amplifying media being greater than 1000, **characterised in that** of the crystallographic axes of the anisotropic laser crystal (1) that axis in whose direction the highest value is present for the crystal rupture limit is oriented along the largest temperature gradient placed in the direction of the smaller dimension of the pumping beam cross section.

2. Pulsed laser array according to claim 1, **characterised in that** the anisotropic laser crystal (1) which contains a crystal cross section traversed by the pumping beam and having parallel opposite pairs of crystal edges (7-10) with different edge lengths, has its greatest coefficient of thermal expansion in the direction of the smaller dimension of the pumping beam cross section and parallel to the crystal edge (7, 8) with the shorter edge length.

3. Pulsed laser array according to claim 2, **characterised in that** the mode-adjusted beams of the pumping radiation and of the laser radiation (15) to be amplified have a mode cross section of less than 0.5 mm$^2$ in each amplifying medium.

4. Pulsed laser array according to any one of claims 1 to 3, **characterised in that** the anisotropic laser crystal (1) is pumped by an asymmetric pumping beam (6) whose pumping beam cross section has different dimensions perpendicular to each other and which is traversed by a laser beam cross section adjusted to this asymmetry at an axial ratio of greater than 1:1 and less than 1:3 in directions extending perpendicular to each other.

**Revendications**

1. Ensemble laser d'impulsions destiné à engendrer des impulsions laser de durée d'impulsion ajustable, ensemble dans lequel est pourvu un oscillateur laser Q-switched, solide et pompé par diode comportant un cristal laser anisotropique (1) et ayant une puissance d'oscillateur variable afin de produire des impulsions d'oscillateur, un amplificateur laser à plusieurs étages étant placé en aval dudit oscillateur laser Q-switched et solide, dans lequel amplificateur un médium d'amplification présentant un gain aux signaux faibles de plus de 10 est prévu dans chaque étage d'amplification et le gain total aux signaux faibles produit par tous les média d'amplification est plus de 1000, l'ensemble étant **caractérisé en ce que**, parmi les axes cristallographiques dudit crystal laser anisotropique (1) celle-ci en direction de laquelle existe la plus grande valeur de la limite de fracture du cristal est orientée selon le plus grand gradient de température placé en direction de la dimension plus petite de la section transversale du faisceau de pompage.

2. Ensemble laser d'impulsions selon la revendication 1, **caractérisé en ce que** le cristal laser anisotropique (1) qui contient une section transversale de cristal traversée par le faisceau de pompage et présentant des paires de bords du cristal (7 - 10) parallèles et opposées de différentes longueurs de bord, présente son coéfficient d'expansion thermique maximal dans la direction de la dimension plus petite de la section transversale du faisceau de pompage et parallèle au bord du cristal (7, 8) de longueur de bord plus courte.

3. Ensemble laser d'impulsions selon la revendication 2, **caractérisé en ce que** les rayons réglés en mode du rayonnement de pompage et du rayonnement laser (15) destiné à être amplifié présentent une section transversale de mode inférieure à 0,5 mm$^2$ dans chaque médium d'amplification.

4. Ensemble laser d'impulsions selon l'une quelconque des revendications 1 à 3, **caractérisé en ce que** le cristal laser anisotropique (1) est pompé par un faisceau de pompage asymmétrique (6) dont la section transversale du faisceau de pompage présente des dimensions différentes mutuellement perpendiculaires et laquelle est traversée par une section transversale de faisceau laser adaptée à cette asymmétrie selon un rapport axial supérieur à 1:1 et inférieur à 1:3 dans des directions mutuellement perpendiculaires.

zum
Verstärker     Fig. 1

Fig. 2

Fig. 3

vom
Festkörperlaser-
Oszillator

Fig. 4

Fig. 4a

Fig. 5

Fig. 6